# EUROPÄISCHE PATENTSCHRIFT

(11) **EP 3 220 046 B1**
(45) Veröffentlichungstag und Bekanntmachung des Hinweises auf die Patenterteilung: **10.04.2019**
(21) Anmeldenummer: 17157160.7
(22) Anmeldetag: 21.02.2017
(51) Int. Cl.: F23N 1/00, F16K 3/06, F16K 3/34

(54) **GASARMATUR UND KOCHGERÄT**
GAS VALVE AND COOKING APPARATUS
VANNE DE GAZ ET APPAREIL DE CUISSON

(30) Priorität: 17.03.2016 EP 16290049
(43) Veröffentlichungstag der Anmeldung: 20.09.2017
(73) Patentinhaber: BSH Hausgeräte GmbH, 81739 München (DE)
(72) Erfinder: Naumann, Jörn, 77770 Durbach (DE)

(56) Entgegenhaltungen:
- EP-A1- 2 457 024
- EP-A1- 2 921 749
- WO-A1-2015/176975
- US-A1- 2002 086 254
- US-A1- 2013 240 767

## Beschreibung

Die vorliegende Erfindung betrifft eine Gasarmatur für ein Kochgerät, insbesondere für ein Gaskochgerät, und ein Kochgerät, insbesondere ein Gaskochgerät, mit einer derartigen Gasarmatur.

Bei Gasarmaturen für Gaskochgeräte handelt es sich zumeist um Armaturen, bei denen mit Hilfe eines Griffschafts ein drehbarer Konus mit Querbohrungen eine veränderliche Ausgangsöffnung in einem Armaturengehäuse schafft. Über diese Ausgangsöffnung kann Gas zu einem Gasbrenner des Gaskochgeräts strömen. Um eine reproduzierbare Gasmengenelnstellmöglichkeit bei derartigen Konusarmaturen zu erhalten, schlagen beispielsweise die ES 1 057 837 U, die US 7,174,913 B2 und die US 2005/0284519 A jeweils vor, den Griffschaft mit einer Rastung zu versehen.

Gasarmaturen können auch sogenannte Gasventileinheiten umfassen. Beispielsweise weisen bekannte Gasventileinheiten Auf-Zu-Ventile auf, die einzeln elektromagnetisch betätigt werden. Hierzu ist jedem der Auf-Zu-Ventile ein eigener Elektromagnet zugeordnet, der das Auf-Zu-Ventil öffnet beziehungsweise schließt. Die Ansteuerung der Elektromagnete erfolgt durch eine elektronische Steuereinheit. Diese elektronische Steuereinheit verarbeitet die von einer Bedienperson eines Gaskochgeräts mittels eines elektrischen Bedienelements erzeugten Signale und steuert die Elektromagnete der Auf-Zu-Ventile entsprechend an. Gasventileinheiten der genannten Art sind beispielsweise in der EP 0 818 655 B1 oder in der WO 2004/063629 A1 beschrieben. Mit derartigen Gasventileinheiten kann der einem Gasbrenner des Gaskochgeräts zugeführte Gasvolumenstrom in mehreren Stufen gesteuert werden. Dabei besitzt der Gasvolumenstrom in jeder Stufe eine reproduzierbare Größe. Ein Durchflussquerschnitt der Gasventileinheit insgesamt und folglich die Größe des Gasvolumenstroms werden eingestellt, indem bestimmte Auf-Zu-Ventile der Gasventileinheit geöffnet beziehungsweise geschlossen werden und dadurch der Gasfluss durch bestimmte Drosselöffnungen freigegeben beziehungsweise unterbrochen wird.

Ferner zeigt die WO 2012/049049 A2 eine Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile aufweist und wobei die mindestens zwei Auf-Zu-Ventile durch Bewegen von zumindest einem Körper relativ zu den Auf-Zu-Ventilen mechanisch betätigbar sind.

Die WO 2015/176975 A1 beschreibt eine Gasarmatur zum Einstellen eines einem Gasbrenner eines Kochgerätes, insbesondere eines Gaskochgerätes, zugeführten Gasvolumenstroms mit mehreren parallel zueinander angeordneten Platten, welche eine Drosselplatte mit einer Mehrzahl N von seriell angeordneten Drosselstellen und zwei zueinander verdrehbare Platten zur Ausbildung einer Mehrzahl N von Auf-Zu-Ventilen umfassen Dieses Dokument offenbart den Oberbegriff des Anspruchs 1.

Die US 2002/0086254 A1 zeigt eine Gasofen-Steueranordnung mit einem Hauptschaltventil und mehreren Steuerschaltventilen. Die Gasofen-Steueranordnung ist von einer Geschlossenposition direkt in eine Vollbrandposition schaltbar. Von der Vollbrandposition ist die Gasofen-Steueranordnung stufenweise in eine Kleinbrandposition verbringbar. Dabei ist das Hauptschaltventil beim Schalten der Steuerschaltventile stets geöffnet.

Vor diesem Hintergrund besteht eine Aufgabe der vorliegenden Erfindung darin, eine verbesserte Gasarmatur zur Verfügung zu stellen.

Demgemäß wird eine Gasarmatur zum Einstellen eines einem Gasbrenner eines Kochgeräts, insbesondere eines Gaskochgeräts, zugeführten Gasvolumenstroms vorgeschlagen. Die Gasarmatur umfasst ein als Auf-Zu-Ventil ausgebildetes Hauptschaltventil und eine Mehrzahl stromabwärts des Hauptschaltventils angeordneter, als Auf-Zu-Ventile ausgebildeter Steuerschaltventile, wobei die Gasarmatur zum Einstellen des Gasvolumenstroms von einer Geschlossenposition ohne Zwischenpositionen direkt in eine Vollbrandposition und von der Vollbrandposition über mehrere Zwischenpositionen stufenweise in eine Kleinbrandposition verbringbar ist, wobei das Hauptschaltventil in der Vollbrandposition, in jeder Zwischenposition und in der Kleinbrandposition geöffnet ist, wobei die Steuerschaltventile bei dem Verbringen der Gasarmatur von der Vollbrandposition in die Kleinbrandposition nacheinander schließbar sind, wobei die Gasarmatur eine Durchflussplatte und eine relativ zu der Durchflussplatte verlagerbare Steuerscheibe umfasst, wobei das Hauptschaltventil eine in der Durchflussplatte vorgesehene Hauptsteueröffnung aufweist, die zum Schließen und Öffnen des Hauptschaltventils von der Steuerscheibe verdeckbar und freigebbar ist, und wobei jedes Steuerschaltventil eine in der Durchflussplatte vorgesehene Steueröffnung aufweist, die zum Schließen und Öffnen des jeweiligen Steuerschaltventils von der Steuerscheibe verdeckbar und freigebbar ist.

Vorzugsweise ist das Hauptschaltventil in der Geschlossenposition geschlossen. In der Geschlossenposition sind die Steuerschaltventile insbesondere geöffnet. Die Gasarmatur ist insbesondere ein Gaseinstellventil. Vorzugsweise ist die Gasarmatur ein gestuftes Gaseinstellventil oder mechanisches Stufenventil. Die Gasarmatur kann auch als Step Valve bezeichnet werden. Bei mechanischen Stufenventilen liegen jeweils N, beispielsweise neun, exakt reproduzierbare Einstellmengen vor, die mit Hilfe eines Griffschafts der Gasarmatur ausgewählt werden können. Die Gasarmatur kann hierzu einen drehbaren Griffschaft aufweisen, der in neun mögliche Positionen verstellbar ist. Mit den neun möglichen Einstellungen ist auch eine gute Darstellbarkeit der jeweiligen Drehwinkelposition gewährleistet. Darunter, dass die Gasarmatur von der Geschlossenposition ohne Zwischenposition direkt in die Vollbrandposition verbringbar ist, ist zu verstehen, dass die auf die Geschlossenposition nachfolgende Position der Gasarmatur die Vollbrandposition ist. Erst nach Erreichen der Vollbrandposition kann die Gasarmatur über die verschiedenen Zwischenpositionen in die Kleinbrandposition verbracht werden. Die Steuerschaltventile werden dann subtraktiv geschlossen beziehungsweise abgeschaltet. Vorzugsweise ist die Gasarmatur jeweils nur einem Gasbrenner zugeordnet. Das Kochgerät kann mehrere Gasbrenner aufweisen, wobei jedem Gasbrenner eine eigene Gasarmatur zugeordnet ist. Die Gasarmatur kann an einer Hauptgasleitung des Kochgeräts angeklemmt sein. Die Gasarmatur ist über eine Rohrleitung mit dem jeweiligen Gasbrenner verbunden. Unter einem Auf-Zu-Ventil ist ein Schaltventil zu verstehen, das wahlweise in zwei Schaltzustände, nämlich in einen geöffneten und in einen geschlossenen Schaltzustand, geschaltet werden kann. In der Vollbrandposition strömt insbesondere ein maximal möglicher Gasvolumenstrom durch die Gasarmatur. Der maximal mögliche Gasvolumenstrom kann dabei durch die Summe von Strömungsquerschnitten aller Steuerschaltventile begrenzt sein. In der Geschlossenposition ist die Gasarmatur insbesondere vollständig geschlossen, so dass kein Gasvolumenstrom durch die Gasarmatur strömt. In der Kleinbrandposition strömt ein minimal möglicher Gasvolumenstrom durch die Gasarmatur. Der minimal mögliche Gasvolumenstrom kann dabei durch einen Strömungsquerschnitt eines der Steuerschaltventile begrenzt sein. Die Steuerschaltventile weisen vorzugsweise jeweils eine kreisrunde Steueröffnung auf, wobei der jeweilige Strömungsquerschnitt eines Steuerschaltventils durch die Kreisfläche der jeweiligen Steueröffnung definiert ist.

Dadurch, dass die Gasarmatur von der Geschlossenposition unmittelbar in die Vollbrandposition verbringbar ist, ist gewährleistet, dass über den Gasbrenner und die zwischen dem Gasbrenner und der Gasarmatur vorgesehene Rohrleitung in die Gasarmatur hineindiffundierte Luft schnellstmöglich aus der Gasarmatur und der Rohrleitung ausgespült wird, wobei schnellstmöglich ein zündfähiges Gas-/Luftgemisch erzeugt wird.

Gemäß einer Ausführungsform ist die Gasarmatur in N Positionen verbringbar, wobei die Geschlossenposition eine erste Position und die Vollbrandposition eine unmittelbar auf die erste Position folgende zweite Position ist und wobei die Kleinbrandposition eine N-te Position ist.

Das heißt, die Steuerschaltventile sind beim Verbringen der Gasarmatur von der Vollbrandposition in die Kleinbrandposition subtraktiv abschaltbar. Mit anderen Worten wird beim Verbringen der Gasarmatur von der Vollbrandposition in die Kleinbrandposition ein Steuerschaltventil nach dem anderen geschlossen. N kann beispielsweise fünf bis neun betragen. Beispielsweise verrastet der Griffschaft der Gasarmatur in jeder der N Positionen.

Die Gasarmatur umfasst eine Durchflussplatte und eine relativ zu der Durchflussplatte verlagerbare Steuerscheibe, wobei das Hauptschaltventil eine in der Durchflussplatte vorgesehene Hauptsteueröffnung aufweist, die zum Schließen und Öffnen des Hauptschaltventils von der Steuerscheibe verdeckbar und freigebbar ist.

Die Hauptsteueröffnung kann eine kreisrunde Bohrung sein. Die Steuerscheibe kann entweder linear gegenüber der Durchflussplatte verlagerbar sein oder rotatorisch zu dieser. Für den Fall, dass die Steuerscheibe rotatorisch zu der Durchflussplatte verlagerbar ist, sind vorzugsweise sowohl die Durchflussplatte als auch die Steuerscheibe als kreisrunde Scheiben ausgebildet. An der Steuerscheibe kann der Griffschaft der Gasarmatur befestigt sein. Der Griffschaft kann entweder manuell oder motorisch angesteuert werden. Die Durchflussplatte ist vorzugsweise aus Edelstahl gefertigt. Die Steuerscheibe kann beispielsweise aus einem Kunststoffmaterial gefertigt sein. Die Steuerscheibe weist vorzugsweise eine erste Kammer und eine zweite Kammer auf. Die erste Kammer der Steuerscheibe kann über eine Einlassöffnung fluidisch mit einer Gaseintrittskammer eines Gasarmaturgehäuses der Gasarmatur verbunden sein. Die zweite Kammer der Steuerscheibe ist vorzugsweise über eine Gasausgangsöffnung mit einer Gasaustrittskammer des Gasarmaturgehäuses fluidisch verbunden.

Jedes Steuerschaltventil weist eine in der Durchflussplatte vorgesehene Steueröffnung auf, die zum Schließen und Öffnen des jeweiligen Steuerschaltventils von der Steuerscheibe verdeckbar und freigebbar ist.

Insbesondere ist das der jeweiligen Steueröffnung zugeordnete Steuerschaltventil geöffnet, wenn die Steuerscheibe die Steueröffnung nicht verdeckt, und geschlossen, wenn die Steuerscheibe die ihr zugeordnete Steueröffnung verdeckt. Entsprechend ist auch das Hauptschaltventil geöffnet, wenn die Steuerscheibe die Hauptsteueröffnung nicht verdeckt, und geschlossen, wenn die Hauptsteueröffnung von der Steuerscheibe verdeckt ist. Die Steueröffnungen können für den Fall, dass die Durchflussplatte eine kreisrunde Form aufweist, auf einer Kreislinie angeordnet sein. Insbesondere können die Steueröffnungen dann einen Winkelbereich von beispielsweise 110° einnehmen. Die Steueröffnungen können kreisrunde Bohrungen sein.

Gemäß einer weiteren Ausführungsform sind die Steueröffnungen parallel zueinander angeordnet, wobei die Hauptsteueröffnung und die Steueröffnungen seriell zueinander angeordnet sind.

Das heißt, der Gasvolumenstrom kann bei geöffneten Steuerschaltventilen gleichzeitig durch alle Steueröffnungen fließen. Betreffend die Hauptsteueröffnung und die Steueröffnungen fließt der Gasvolumenstrom zunächst durch die Hauptsteueröffnung und anschließend durch die Steueröffnungen. In der Vollbrandposition und in den Zwischenpositionen werden die jeweils freigegebenen Steueröffnungen parallel von Gas durchströmt. Ein Durchflussquerschnitt der Gasarmatur ist in der Vollbrandposition vorzugsweise durch die Summe von Durchflussquerschnitten der Steueröffnungen definiert.

Gemäß einer weiteren Ausführungsform weisen die Steueröffnungen gleiche oder unterschiedliche Durchmesser auf.

Alternativ können auch einige Steueröffnungen gleiche und andere Steueröffnungen unterschiedliche Durchmesser aufweisen.

Gemäß einer weiteren Ausführungsform verkleinern sich die Durchmesser der Steueröffnungen in einer Strömungsrichtung des Gasvolumenstroms.

Die Strömungsrichtung ist insbesondere von der Hauptsteueröffnung in Richtung der Steueröffnungen orientiert. Das heißt, eine erste Steueröffnung ist im Durchmesser größer als eine zweite Steueröffnung, die wiederum größer ist als eine dritte Steueröffnung, die wiederum größer ist als eine vierte Steueröffnung, die wiederum größer ist als eine fünfte Steueröffnung. Alternativ können sich die Steueröffnungen in der Strömungsrichtung des Gasvolumenstroms auch vergrößern. Die Steueröffnungen können beispielsweise als kreisrunde, die Durchflussplatte vollständig durchbrechende Bohrungen ausgeführt sein.

Gemäß einer weiteren Ausführungsform ist ein Durchmesser der Hauptsteueröffnung größer als ein Durchmesser der größten Steueröffnung.

Hierdurch wird erreicht, dass die Hauptsteueröffnung den Gasvolumenstrom nicht beschränkt, sondern dass der Gasvolumenstroms in der Vollbrandposition durch die parallel mit Gas durchströmten Steueröffnungen begrenzt ist.

Gemäß einer weiteren Ausführungsform ist in der Durchflussplatte eine stromabwärts der Steueröffnungen angeordnete Gasausgangsöffnung vorgesehen, die stets freigegeben ist.

Unter stets freigegeben ist zu verstehen, dass die Gasausgangsöffnung nicht Teil eines Auf-Zu-Ventils ist und niemals von der Steuerscheibe verdeckt ist. Die Gasausgangsöffnung verbindet die zweite Kammer der Steuerscheibe fluidisch mit der Gasaustrittskammer des Gasarmaturgehäuses.

Gemäß einer weiteren Ausführungsform ist ein Durchmesser der Gasausgangsöffnung gleich groß oder kleiner als der Durchmesser der Hauptsteueröffnung und größer als der Durchmesser der größten Steueröffnung.

Hierdurch ist gewährleistet, dass in der Vollbrandposition der Gasvolumenstrom nicht durch den Durchmesser der Hauptsteueröffnung begrenzt ist. Der maximale Gasvolumenstrom kann je nach dem gewählten Durchmesser der Gasausgangsöffnung durch den Durchmesser der Gasausgangsöffnung beziehungsweise durch einen Durchflussquerschnitt der Gasausgangsöffnung begrenzt sein.

Gemäß einer weiteren Ausführungsform weist die Steuerscheibe eine Kammer auf, die die freigegebenen Steueröffnungen fluidisch mit der Gasausgangsöffnung verbindet.

Die Kammer dichtet vorzugsweise die freigegebenen Steueröffnungen fluidisch gegenüber der Gaseintrittskammer ab. Die Kammer ist insbesondere die zuvor schon erwähnte zweite Kammer der Steuerscheibe. Die zweite Kammer kann oberseitig durch die Durchflussplatte begrenzt werden.

Gemäß einer weiteren Ausführungsform ist zum Abdichten der Steuerscheibe gegenüber der Durchflussplatte an der Steuerscheibe eine Dichtlippe, insbesondere eine Gummidichtlippe, vorgesehen.

Beispielsweise kann die Dichtlippe in einem Zweikomponenten-Spritzgussverfahren an der Steuerscheibe angespritzt sein. Alternativ kann die Dichtlippe an der Steuerscheibe angeklebt sein. Vorzugsweise sind mehrere Dichtlippen vorgesehen. Jedem Auf-Zu-Ventil kann eine Dichtlippe zugeordnet sein. Mit Hilfe der Dichtlippen kann verhindert werden, dass Schmutzpartikel das Hauptschaltventil oder die Steuerschaltventile blockieren, so dass die Funktionalität der Gasarmatur stets gewährleistet ist. Mit Hilfe der Dichtlippe können die Schmutzpartikel einfach weggewischt werden.

Gemäß einer weiteren Ausführungsform ist die Steuerscheibe mit Hilfe eines Federelements gegen die Durchflussplatte vorgespannt.

Insbesondere dichtet die Steuerscheibe die Steueröffnungen der Steuerschaltventile und/oder die Gasausgangsöffnung entgegen einer Durchflussrichtung des Gases gegenüber einem Gaseingang der Gasarmatur ab. Vorzugsweise presst das Federelement die Steuerscheibe mit einer konstanten Federkraft gegen die Durchflussplatte. Hierdurch wird die Funktionalität des Hauptschaltventils und der Steuerschaltventile dauerhaft gewährleistet. Das Federelement kann eine Tellerfeder oder eine Federscheibe sein. Das Federelement stützt sich auf einem Gehäuseunterteil des Gasarmaturgehäuses ab.

Gemäß einer weiteren Ausführungsform umfasst die Gasarmatur ein Gasarmaturgehäuse, in dem die Durchflussplatte, die Steuerscheibe und das Federelement aufgenommen sind, wobei die Durchflussplatte, die Steuerscheibe und das Federelement in einer gemeinsamen Montagerichtung in dem Gasarmaturgehäuse montiert sind.

Vorzugsweise umfasst das Gasarmaturgehäuse ein Gehäuseunterteil und ein auf dem Gehäuseunterteil angeordnetes Gehäuseoberteil. Das Gehäuseunterteil und das Gehäuseoberteil können beispielsweise miteinander verschraubt sein. Die Durchflussplatte kann zwischen dem Gehäuseunterteil und dem Gehäuseoberteil festgeklemmt sein. Das Federelement ist vorzugsweise zwischen der Steuerscheibe und dem Gehäuseunterteil angeordnet. Zum Montieren der Gasarmatur werden das Federelement, die Steuerscheibe und die Durchflussplatte in das Gehäuseunterteil von oben her in der Montagerichtung eingelegt und mit Hilfe des Gehäuseoberteils verschlossen. Hierdurch ist eine schnelle und einfache Montage der Gasarmatur gewährleistet.

Ferner wird ein Kochgerät, insbesondere ein Gaskochgerät, mit einer derartigen Gasarmatur vorgeschlagen.

Das Kochgerät kann eine Vielzahl derartiger Gasarmaturen aufweisen. Insbesondere weist das Kochgerät auch eine Vielzahl an Gasbrennern auf, wobei jedem Gasbrenner eine Gasarmatur zugeordnet ist. Das Kochgerät ist insbesondere ein Haushaltsgerät. Das Kochgerät kann auch als Haushaltskochgerät oder Haushaltsgaskochgerät bezeichnet werden. Das Kochgerät kann ein Herd sein.

Weitere mögliche Implementierungen der Gasarmatur und/oder des Kochgeräts umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Gasarmatur und/oder des Kochgeräts hinzufügen.

Weitere vorteilhafte Ausgestaltungen und Aspekte der Gasarmatur und/oder des Kochgeräts sind Gegenstand der Unteransprüche sowie der im Folgenden beschriebenen Ausführungsbeispiel der Gasarmatur und/oder des Kochgeräts. Im Weiteren werden die Gasarmatur und/oder das Kochgerät anhand von bevorzugten Ausführungsformen unter Bezugnahme auf die beigelegten Figuren näher erläutert.
- Fig. 1: zeigt eine stark vereinfachte schematische Ansicht eines Kochgeräts;
- Fig. 2: zeigt eine stark vereinfachte schematische Ansicht einer Ausführungsform einer Gasarmatur für das Kochgerät gemäß Fig. 1;
- Fig. 3: zeigt eine schematische Schnittansicht der Gasarmatur gemäß Fig. 2;
- Fig. 4: zeigt eine weitere schematische Schnittansicht der Gasarmatur gemäß Fig. 2;
- Fig. 5: zeigt eine weitere schematische Schnittansicht der Gasarmatur gemäß Fig. 2; und
- Fig. 6: zeigt eine weitere schematische Schnittansicht der Gasarmatur gemäß Fig. 2.

In den Figuren sind gleiche oder funktionsgleiche Elemente mit denselben Bezugszeichen versehen worden, sofern nichts anderes angegeben ist.

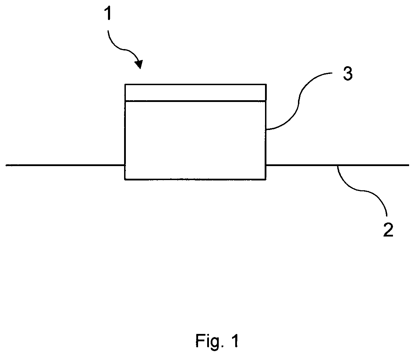

Die Fig. 1 zeigt eine stark vereinfachte Ansicht eines Kochgeräts 1, insbesondere eines Gaskochgeräts, mit einer Kochstelle 2, insbesondere einer Gaskochstelle. Das Kochgerät 1 ist ein Haushaltskochgerät. Die Kochstelle 2 umfasst eine Vielzahl, beispielsweise vier oder sechs, an Gasbrennern 3.

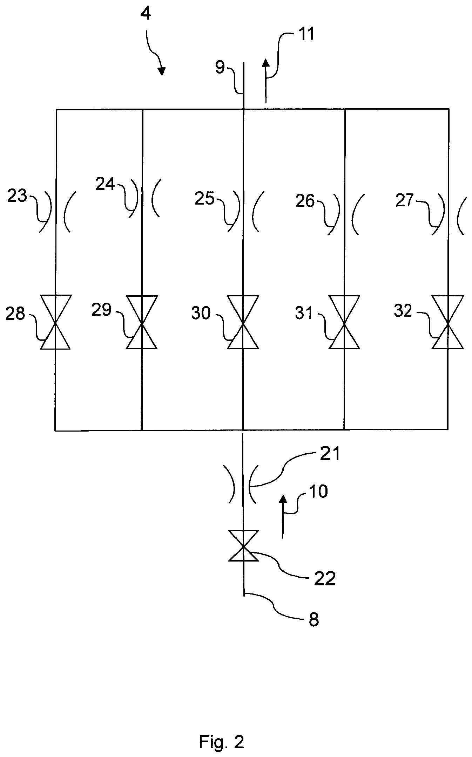

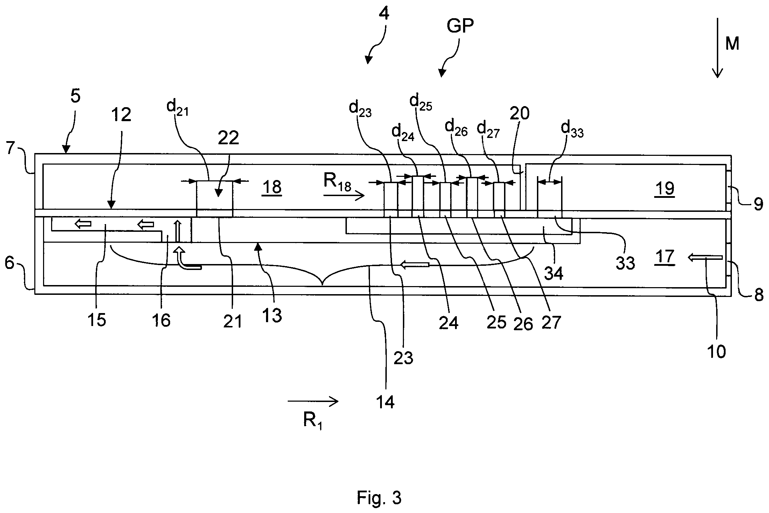

Die Fig. 2 zeigt eine stark vereinfachte schematische Ansicht einer Gasarmatur 4 zum Einstellen eines dem Gasbrenner 3 zugeführten Gasvolumenstroms. Jedem Gasbrenner 3 des Kochgeräts 1 kann eine derartige Gasarmatur 4 zugeordnet sein. Die Gasarmatur 4 kann auch als Gasventil, Gaseinstellventil oder Gaseinstellarmatur bezeichnet werden. Die Gasarmatur 4 ist insbesondere ein gestuftes Gasventil beziehungsweise eine gestufte Gasarmatur oder ein sogenanntes Step Valve. Das heißt, der Gasvolumenstrom zu dem jeweiligen Gasbrenner 3 kann mit genau reproduzierbaren Stufen eingestellt werden. Die Fig. 3 bis 6 zeigen jeweils eine schematische Schnittansicht der Gasarmatur 4. Im Folgenden wird auf die Fig. 2 bis 6 gleichzeitig Bezug genommen.

Die Gasarmatur 4 umfasst ein Gasarmaturgehäuse 5. Das Gasarmaturgehäuse 5 ist vorzugsweise aus einem Metallwerkstoff oder aus einem nichtmetallischen Werkstoff gefertigt. Beispielsweise kann das Gasarmaturgehäuse 5 aus einem Magnesium- oder Aluminiumwerkstoff oder aus einem Kunststoffmaterial gefertigt sein. Das Gasarmaturgehäuse 5 umfasst ein Gehäuseunterteil 6 und ein Gehäuseoberteil 7, die miteinander verbunden, beispielsweise miteinander verschraubt, sind. Das Gehäuseunterteil 6 weist einen Gaseingang 8 und das Gehäuseoberteil 7 weist einen Gasausgang 9 auf. Durch den Gaseingang 8 strömt, wie mit Hilfe eines Pfeils 10 gezeigt, Gas in das Gasarmaturgehäuse 5 hinein, und über den Gasausgang 9 strömt, wie mit Hilfe eines Pfeils 11 gezeigt, Gas aus dem Gasarmaturgehäuse 5 aus hin zu dem Gasbrenner 3.

In dem Gasarmaturgehäuse 5 ist eine Durchflussplatte 12 aufgenommen. Die Durchflussplatte 12 kann zwischen dem Gehäuseoberteil 7 und dem Gehäuseunterteil 6 eingeklemmt sein. Weiterhin sind in dem Gasarmaturgehäuse 5 eine Steuerscheibe 13 und ein Federelement 14 vorgesehen. Die Steuerscheibe 13 kann beispielsweise aus einem Metallwerkstoff oder aus einem Kunststoffmaterial gefertigt sein. Das Federelement 14 kann eine Federscheibe sein. Die Steuerscheibe 13 ist zwischen der Durchflussplatte 12 und dem Federelement 14 angeordnet. Das Federelement 14 spannt die Steuerscheibe 13 gegen die Durchflussplatte 12 vor. Dabei stützt sich das Federelement 14 an dem Gehäuseunterteil 6 ab. Das Federelement 14, die Steuerscheibe 13 und die Durchflussplatte 12 sind in einer gemeinsamen Montagerichtung M nacheinander in dem Gehäuseunterteil 6 montierbar.

Die Steuerscheibe 13 weist eine erste Kammer 15 auf, die über eine Einlassöffnung 16 mit einer von dem Gehäuseunterteil 6 und der Durchflussplatte 12 umschlossenen Gaseintrittskammer 17, in die über den Gaseingang 8 Gas eintritt, fluidisch verbunden ist. Die Einlassöffnung 16 kann eine Bohrung sein. Die Einlassöffnung 16 ist immer geöffnet, so dass die erste Kammer 15 stets in Fluidverbindung mit der Gaseintrittskammer 17 ist. Oberseitig ist die erste Kammer 15 durch die Durchflussplatte 12 abgeschlossen.

Die Durchflussplatte 12 ist an dem Gasarmaturgehäuse 5 festgelegt und die Steuerscheibe 13 ist gegenüber der ortsfesten Durchflussplatte 12 verlagerbar. Insbesondere kann die Steuerscheibe 13 gegenüber der Durchflussplatte 12 in einer ersten Richtung R₁ und in einer zweiten Richtung R₂ linear verlagert werden. Die Richtungen R₁ und R₂ sind entgegengesetzt orientiert. Alternativ kann die Steuerscheibe 13 auch rotatorisch bezüglich der Durchflussplatte 12 verlagert werden. In diesem Fall kann die Steuerscheibe 13 kreisrund sein. Beispielsweise kann an der Steuerscheibe 13 ein Betätigungs- oder Griffschaft zum manuellen oder motorischen Verlagern der Steuerscheibe 13 vorgesehen sein. Die seitliche Verlagerbarkeit der Steuerscheibe 13 kann durch das Gasarmaturgehäuse 5 begrenzt sein.

Oberseitig der Durchflussplatte 12 sind in dem Gehäuseoberteil 7 eine Gasverteilungskammer 18 und eine Gasaustrittskammer 19 vorgesehen. Aus der Gasaustrittskammer 19 tritt das Gas über den Gasausgang 9 aus dem Gasarmaturgehäuse 5 aus und wird zu dem Gasbrenner 3 geleitet. Die Gasverteilungskammer 18 und die Gasaustrittskammer 19 sind mit Hilfe einer Gehäusewand 20 voneinander getrennt. Einen Boden der Gasverteilungskammer 18 und der Gasaustrittskammer 19 bildet jeweils die Durchflussplatte 12.

Die Durchflussplatte 12 umfasst eine Hauptsteueröffnung 21. Die Hauptsteueröffnung 21 durchbricht die Durchflussplatte 12. Beispielsweise ist die Hauptsteueröffnung 21 eine kreisrunde Bohrung mit einem Durchmesser d₂₁. Die Hauptsteueröffnung 21 bildet zusammen mit der Steuerscheibe 13 ein als Auf-Zu-Ventil ausgebildetes Hauptschaltventil 22. Unter einem Auf-Zu-Ventil ist ein Schaltventil zu verstehen, das nur zwei Zustände einnehmen kann und entweder vollständig geöffnet oder vollständig geschlossen ist.

In einer Strömungsrichtung des Gasvolumenstroms, der in den Fig. 2 bis 6 jeweils mit Pfeilen gekennzeichnet ist, ist stromabwärts des Hauptschaltventils 22 eine Vielzahl an Steueröffnungen 23 bis 27 vorgesehen. Die Anzahl der Steueröffnungen 23 bis 27 ist beliebig. Beispielsweise können, wie in den Fig. 2 bis 6 dargestellt, fünf Steueröffnungen 23 bis 27, insbesondere eine erste Steueröffnung 23, eine zweite Steueröffnung 24, eine dritte Steueröffnung 25, eine vierte Steueröffnung 26 und eine fünfte Steueröffnung 27, vorgesehen sein. Es können auch mehr als fünf, beispielsweise neun, Steueröffnungen 23 bis 27 vorgesehen sein. Die Steueröffnungen 23 bis 27 sind in Reihe angeordnet.

Die Steueröffnungen 23 bis 27 können als kreisrunde, die Durchflussplatte 12 durchbrechende Bohrungen mit entsprechenden Durchmessern d₂₃ bis d₂₇ ausgebildet sein. Die Durchmesser d₂₃ bis d₂₇ können alle gleich groß sein. Alternativ können die Durchmesser d₂₃ bis d₂₇ auch unterschiedlich groß sein. Insbesondere nehmen die Durchmesser d₂₃ bis d₂₇ in einer Strömungsrichtung R₁₈ des Gases in der Gasverteilungskammer 18 ab. Alternativ können die Durchmesser d₂₃ bis d₂₇ in der Strömungsrichtung R₁₈ auch zunehmen. Der Durchmesser d₂₁ der Hauptsteueröffnung 21 ist vorzugsweise größer als der größte Durchmesser, in diesem Fall der Durchmesser d₂₃ der Steueröffnung 23, aller Steueröffnungen 23 bis 27.

Wie zuvor schon erwähnt, kann die Steuerscheibe 13 kreisrund sein und rotatorisch gegenüber der Durchflussplatte 12 verlagerbar sein. In diesem Fall ist auch die Durchflussplatte 12 kreisrund, und die Steueröffnungen 23 bis 27 können auf einer Kreislinie liegen und einen Winkelbereich von beispielsweise 110° einnehmen. Die Steueröffnungen 23 bis 27 bilden zusammen mit der Steuerscheibe 13 eine Mehrzahl an stromabwärts des Hauptschaltventils 22 angeordneten als Auf-Zu-Ventile ausgebildeten Steuerschaltventilen 28 bis 32. Insbesondere sind ein erstes Steuerschaltventil 28, ein zweites Steuerschaltventil 29, ein drittes Steuerschaltventil 30, ein viertes Steuerschaltventil 31 und ein fünftes Steuerschaltventil 32 vorgesehen.

Die Durchflussplatte 12 weist weiterhin eine stromabwärts der Steueröffnungen 23 bis 27 angeordnete Gasausgangsöffnung 33 auf. Die Gasausgangsöffnung 33 kann als eine kreisrunde, die Durchflussplatte 12 vollständig durchbrechende Bohrung mit einem Durchmesser d₃₃ ausgebildet sein. Die Gasausgangsöffnung 33 ist stets geöffnet und nicht schaltbar. Die Gasausgangsöffnung 33 verbindet eine zweite Kammer 34 der Steuerscheibe 13, in die in einem geöffneten Zustand der jeweiligen Steuerschaltventile 28 bis 32 auch die Steueröffnungen 23 bis 27 münden, fluidisch mit der Gasaustrittskammer 19 des Gehäuseoberteils 7. Gleichzeitig sind die zweite Kammer 34 und die Gasaustrittskammer 19 fluiddicht gegenüber Gaseintrittskammer 17 abgedichtet.

Der Durchmesser d₃₃ der Gasausgangsöffnung 33 ist gleich groß oder kleiner als der Durchmesser d₂₁ der Hauptsteueröffnung 21, jedoch vorzugsweise größer als der größte Durchmesser der Steueröffnungen 23 bis 27, beispielsweise größer als der Durchmesser d₂₃ der ersten Steueröffnung 23. Zum Abdichten der Steuerscheibe 13 gegenüber der Durchflussplatte 12 kann an der Steuerscheibe 13 eine Dichtlippe oder eine Vielzahl an Dichtlippen vorgesehen sein. Die Dichtlippen können insbesondere aus Gummi gefertigt sein.

Die Funktionalität der Gasarmatur 4 wird im Folgenden mit Bezug auf die Fig. 2 bis 6 zusammenfassend erläutert. Die Fig. 3 zeigt die Gasarmatur 4 in einer Geschlossenposition GP, in der zwar Gas durch den Gaseingang 8 eintreten, jedoch nicht wieder durch den Gasausgang 9 aus der Gasarmatur 4 austreten kann. In der Geschlossenposition GP sind die Gaseintrittskammer 17 und die erste Kammer 15 der Steuerscheibe 13 mit Gas gefüllt. In der Geschlossenposition GP kann die Steuerscheibe 13 nur in der ersten Richtung R₁ und nicht in der zweiten Richtung R₂ verlagert werden.

In der Geschlossenposition GP ist das Hauptschaltventil 22 geschlossen. Hierzu verdeckt die Steuerscheibe 13 die Hauptsteueröffnung 21. In der Geschlossenposition GP sind alle Steuerschaltventile 28 bis 32 geöffnet. Das heißt, die Steuerscheibe 13 verdeckt keine der Steueröffnungen 23 bis 27. Somit ist in der Geschlossenposition GP die Gasverteilungskammer 18 über die Steueröffnungen 23 bis 27 und die Gasausgangsöffnung 33 sowie die zweite Kammer 34 der Steuerscheibe 13 fluidisch mit der Gasaustrittskammer 19 verbunden. Die zweite Kammer 34 ist dabei oberseitig durch die Durchflussplatte 12 begrenzt.

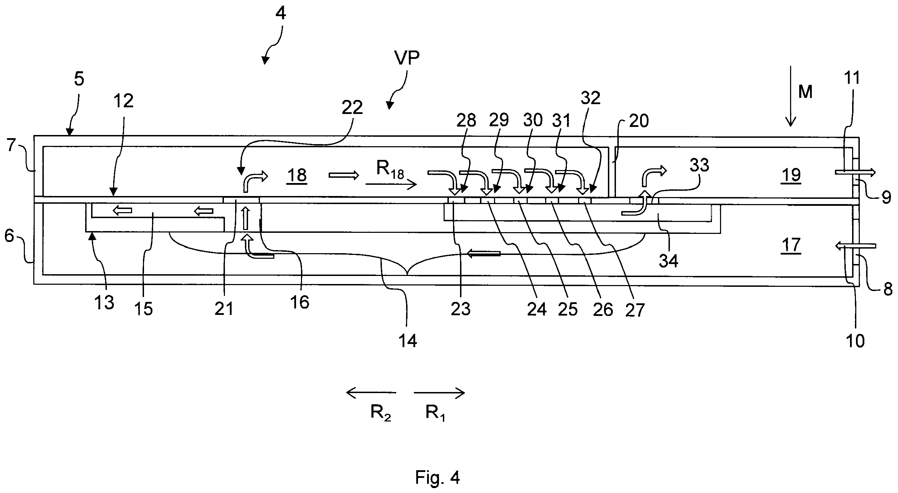

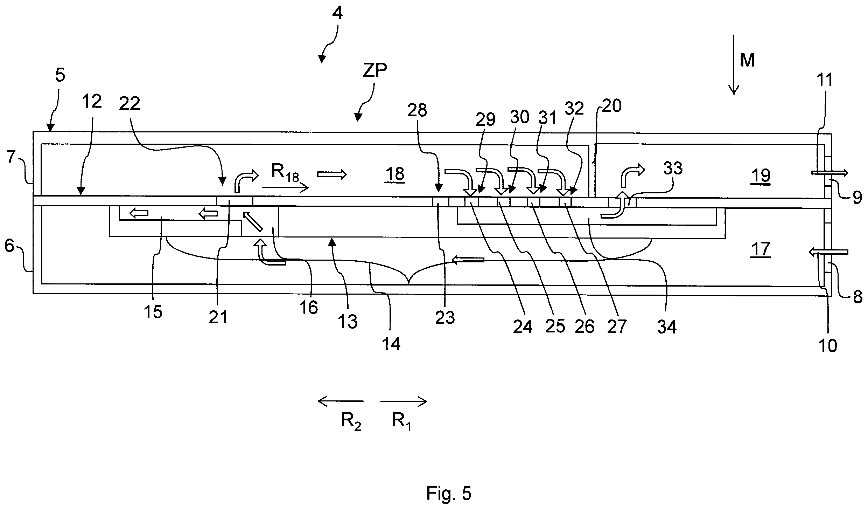

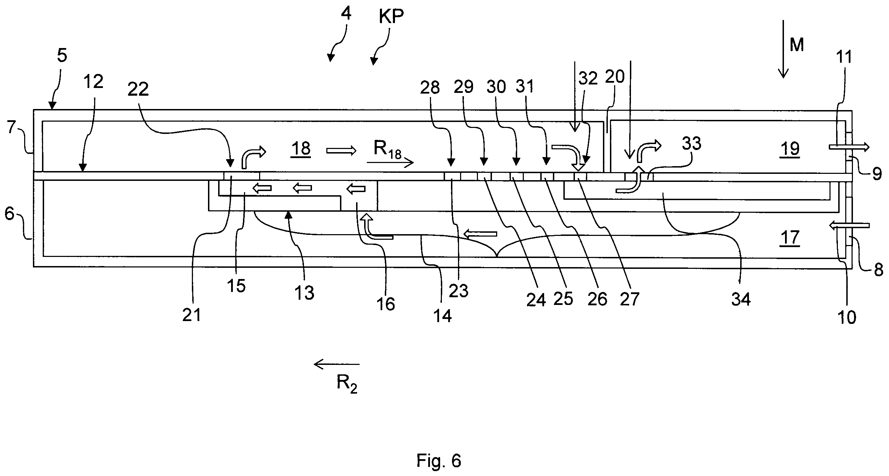

Von der Geschlossenposition GP ist die Gasarmatur 4 zum Einstellen des Gasvolumenstroms direkt ohne Zwischenpositionen in eine in der Fig. 4 gezeigte Vollbrandposition VP verbringbar. Hierzu wird die Steuerscheibe 13 in der ersten Richtung R₁ bezüglich der Durchflussplatte 12 linear verlagert. Beim Verlagern der Steuerscheibe 13 gegenüber der Durchflussplatte 12 wird die Hauptsteueröffnung 21 freigegeben und das Hauptschaltventil 22 somit geöffnet. In der Vollbrandposition VP sind auch noch alle Steuerschaltventile 28 bis 32 geöffnet. In der Vollbrandposition VP kann der Gasvolumenstrom durch einen Durchflussquerschnitt der Gasausgangsöffnung 33 begrenzt sein. Von der in der Fig. 4 gezeigten Vollbrandposition VP ist die Gasarmatur 4 über mehrere Zwischenpositionen ZP, von denen in der Fig. 5 eine gezeigt ist, in eine in der Fig. 6 gezeigte Kleinbrandposition KP verbringbar. Die Anzahl der Zwischenpositionen ZP ist beliebig. Beispielsweise können drei oder mehr Zwischenpositionen ZP vorgesehen sein.

In der Fig. 5 ist die Gasarmatur 4 in einer ersten Zwischenposition ZP gezeigt, in der nur das erste Steuerschaltventil 28 geschlossen ist. Von der Vollbrandposition VP wird die Gasarmatur 4 durch ein Verlagern der Steuerscheibe 13 in der ersten Richtung R₁ in die erste Zwischenposition ZP verbracht. Dabei verdeckt die Steuerscheibe 13 die Hauptsteueröffnung 21 nicht, so dass das Hauptschaltventil 22 weiterhin geöffnet ist. Die Steuerscheibe 13 verdeckt jedoch die erste Steueröffnung 23, so dass das erste Steuerschaltventil 28 geschlossen ist. Die Steuerscheibe 13 verdeckt in der ersten Zwischenposition ZP jedoch nicht die Steueröffnungen 24 bis 27, so dass die Steuerschaltventile 29 bis 32 weiterhin geöffnet sind. Ein Durchflussquerschnitt der Gasarmatur 4 ist somit durch die parallel mit Gas durchströmten Steueröffnungen 24 bis 27 definiert. Die Gasverteilungskammer 18 ist also über die Steueröffnungen 24 bis 27, die zweite Kammer 34 der Steuerscheibe 13 und die Gasausgangsöffnung 33 mit der Gasaustrittskammer 19 fluidisch verbunden.

In einer nicht gezeigten zweiten Zwischenposition ist das Hauptschaltventil 22 geöffnet, und die Steuerschaltventile 28, 29 sind geschlossen, wobei die Steuerschaltventile 30 bis 32 noch geöffnet sind. In einer ebenfalls nicht gezeigten dritten Zwischenposition sind das Hauptschaltventil 22 und die Steuerschaltventile 31 und 32 geöffnet sowie die Steuerschaltventile 28 bis 30 geschlossen.

In der in der Fig. 6 gezeigten Kleinbrandposition KP ist die Steuerscheibe 13 in der ersten Richtung R₁ so weit verlagert, dass mit Ausnahme des Steuerschaltventils 32 alle Steuerschaltventile 28 bis 31 geschlossen sind. Hierzu verdeckt die Steuerscheibe 13 die Steueröffnungen 23 bis 26. Die Hauptsteueröffnung 21 ist von der Steuerscheibe 13 nicht verdeckt, so dass das Hauptschaltventil 22 geöffnet ist. Von der Kleinbrandposition KP kann die Gasarmatur 4 über die Zwischenpositionen ZP wieder zurück in die Vollbrandposition VP verbracht werden. Das heißt, die Steuerschaltventile 28 bis 31 sind bei dem Verbringen der Gasarmatur 4 von der Vollbrandposition VP in die Kleinbrandposition KP nacheinander, das heißt, subtraktiv, schließbar.

Dadurch, dass die Gasarmatur 4 von der Geschlossenposition GP direkt ohne Zwischenpositionen ZP in die Vollbrandposition VP verbracht wird, ist gewährleistet, dass auch bei einer längeren Außerbetriebnahme des Kochgeräts 1, bei der Frischluft über den Gasbrenner 3 in die Gasaustrittskammer 19 und die Gasverteilungskammer 18 diffundieren kann und das drucklose Gas somit verdünnt wird, die Gasaustrittkammer 19 und die Gasverteilungskammer 18 beim Einschalten des Kochgeräts 1 mit dem maximalen Gasvolumenstrom gespült werden. Dies geschieht dadurch, dass in der Vollbrandposition VP der maximal mögliche Gasvolumenstrom durch die Gasarmatur 4 strömt und so die Gasaustrittskammer 19, die Gasverteilungskammer 18 und eine zwischen der Gasarmatur 4 und Gasventil 3 vorgesehene Rohrleitung schnellstmöglich mit Gas gefüllt werden. Hierdurch muss ein Benutzer beim Einschalten des Kochgeräts 1 nicht erst lange warten bis sich ein zündfähiges Gemisch gebildet hat.

Weiterhin ist durch die Verlagerbarkeit der Steuerscheibe 13 relativ zu der Durchflussplatte 12 gewährleistet, dass eventuell zwischen der Steuerscheibe 13 und der Durchflussplatte 12 vorhandene Schmutzpartikel weggewischt werden, wodurch die Funktionalität der Steuerschaltventile 28 bis 32 und des Hauptschaltventils 22 stets gewährleistet ist. Das Wegwischen der Schmutzpartikel kann durch die an der Steuerscheibe 13 vorgesehene Dichtlippe nochmals optimiert werden.

Obwohl die vorliegende Erfindung anhand von Ausführungsbeispielen beschrieben wurde, ist sie vielfältig modifizierbar.

### Verwendete Bezugszeichen:

- 1: Kochgerät
- 2: Kochstelle
- 3: Gasbrenner
- 4: Gasarmatur
- 5: Gasarmaturgehäuse
- 6: Gehäuseunterteil
- 7: Gehäuseoberteil
- 8: Gaseingang
- 9: Gasausgang
- 10: Pfeil
- 11: Pfeil
- 12: Durchflussplatte
- 13: Steuerscheibe
- 14: Federelement
- 15: Kammer
- 16: Einlassöffnung
- 17: Gaseintrittskammer
- 18: Gasverteilungskammer
- 19: Gasaustrittskammer
- 20: Gehäusewand
- 21: Hauptsteueröffnung
- 22: Hauptschaltventil
- 23: Steueröffnung
- 24: Steueröffnung
- 25: Steueröffnung
- 26: Steueröffnung
- 27: Steueröffnung
- 28: Steuerschaltventil
- 29: Steuerschaltventil
- 30: Steuerschaltventil
- 31: Steuerschaltventil
- 32: Steuerschaltventil
- 33: Gasausgangsöffnung
- 34: Kammer

- d₂₁: Durchmesser
- d₂₃: Durchmesser
- d₂₄: Durchmesser
- d₂₅: Durchmesser
- d₂₆: Durchmesser
- d₂₇: Durchmesser
- d₃₃: Durchmesser
- GP: Geschlossenposition
- KP: Kleinbrandposition
- M: Montagerichtung
- R₁: Richtung
- R₂: Richtung
- R₁₈: Strömungsrichtung
- VP: Vollbrandposition
- ZP: Zwischenposition

## Patentansprüche

1. Gasarmatur (4) zum Einstellen eines einem Gasbrenner (3) eines Kochgeräts (1), insbesondere eines Gaskochgeräts, zugeführten Gasvolumenstroms, mit einem als Auf-Zu-Ventil ausgebildeten Hauptschaltventil (22) und einer Mehrzahl stromabwärts des Hauptschaltventils (22) angeordneter, als Auf-Zu-Ventile ausgebildeter Steuerschaltventile (28 - 32), wobei die Gasarmatur (4) zum Einstellen des Gasvolumenstroms von einer Geschlossenposition (GP) ohne Zwischenpositionen (ZP) direkt in eine Vollbrandposition (VP) und von der Vollbrandposition (VP) über mehrere Zwischenpositionen (ZP) stufenweise in eine Kleinbrandposition (KP) verbringbar ist, wobei das Hauptschaltventil (22) in der Vollbrandposition (VP), in jeder Zwischenposition (ZP) und in der Kleinbrandposition (KP) geöffnet ist, wobei die Steuerschaltventile (28 - 32) bei dem Verbringen der Gasarmatur (4) von der Vollbrandposition (VP) in die Kleinbrandposition (KP) nacheinander schließbar sind, wobei die Gasarmatur (4) eine Durchflussplatte (12) und eine relativ zu der Durchflussplatte (12) verlagerbare Steuerscheibe (13) umfasst, wobei jedes Steuerschaltventil (28 - 32) eine in der Durchflussplatte (12) vorgesehene Steueröffnung (23 - 27) aufweist, die zum Schließen und Öffnen des jeweiligen Steuerschaltventils (28 - 32) von der Steuerscheibe (13) verdeckbar und freigebbar ist, **dadurch gekennzeichnet, dass** das Hauptschaltventil (22) eine in der Durchflussplatte (12) vorgesehene Hauptsteueröffnung (21) aufweist, die zum Schließen und Öffnen des Hauptschaltventils (22) von der Steuerscheibe (13) verdeckbar und freigebbar ist.

2. Gasarmatur nach Anspruch 1, **dadurch gekennzeichnet, dass** die Gasarmatur (4) in N Positionen verbringbar ist, wobei die Geschlossenposition (GP) eine erste Position und die Vollbrandposition (VP) eine unmittelbar auf die erste Position folgende zweite Position ist und wobei die Kleinbrandposition (KP) eine N-te Position ist.

3. Gasarmatur nach Anspruch 1 oder 2, **dadurch gekennzeichnet, dass** die Steueröffnungen (23 - 27) parallel zueinander angeordnet sind, wobei die Hauptsteueröffnung (21) und die Steueröffnungen (23 - 27) seriell zueinander angeordnet sind.

4. Gasarmatur nach einem der Ansprüche 1 - 3, **dadurch gekennzeichnet, dass** die Steueröffnungen (23 - 27) gleiche oder unterschiedliche Durchmesser (d₂₃ - d₂₇) aufweisen.

5. Gasarmatur nach Anspruch 4, **dadurch gekennzeichnet, dass** sich die Durchmesser (d₂₃ - d₂₇) der Steueröffnungen (23 - 27) in einer Strömungsrichtung (R₁₈) des Gasvolumenstroms verkleinern.

6. Gasarmatur nach Anspruch 4 oder 5, **dadurch gekennzeichnet, dass** ein Durchmesser (d₂₁) der Hauptsteueröffnung (21) größer als ein Durchmesser (d₂₃) der größten Steueröffnung (23) ist.

7. Gasarmatur nach Anspruch 6, **dadurch gekennzeichnet, dass** in der Durchflussplatte (12) eine stromabwärts der Steueröffnungen (23 - 27) angeordnete Gasausgangsöffnung (33) vorgesehen ist, die stets freigegeben ist.

8. Gasarmatur nach Anspruch 7, **dadurch gekennzeichnet, dass** ein Durchmesser (d₃₃) der Gasausgangsöffnung (33) gleich groß oder kleiner als der Durchmesser (d₂₁) der Hauptsteueröffnung (21) und größer als der Durchmesser (d₂₃) der größten Steueröffnung (23) ist.

9. Gasarmatur nach Anspruch 7 oder 8, **dadurch gekennzeichnet, dass** die Steuerscheibe (13) eine Kammer (34) aufweist, die die freigebenen Steueröffnungen (23 - 27) fluidisch mit der Gasausgangsöffnung (33) verbindet.

10. Gasarmatur nach einem der Ansprüche 1 - 9, **dadurch gekennzeichnet, dass** zum Abdichten der Steuerscheibe (13) gegenüber der Durchflussplatte (12) an der Steuerscheibe (13) eine Dichtlippe, insbesondere eine Gummidichtlippe, vorgesehen ist.

11. Gasarmatur nach einem der Ansprüche 1 - 10, **dadurch gekennzeichnet, dass** die Steuerscheibe (13) mit Hilfe eines Federelements (14) gegen die Durchflussplatte (12) vorgespannt ist.

12. Gasarmatur nach Anspruch 11, **gekennzeichnet durch** ein Gasarmaturgehäuse (5), in dem die Durchflussplatte (12), die Steuerscheibe (13) und das Federelement (14) aufgenommen sind, wobei die Durchflussplatte (12), die Steuerscheibe (13) und das Federelement (14) in einer gemeinsamen Montagerichtung (M) in dem Gasarmaturgehäuse (5) montiert sind.

13. Kochgerät (1), insbesondere Gaskochgerät, mit einer Gasarmatur (4) nach einem der Ansprüche 1 - 12.

## Claims

1. Gas valve (4) for adjusting a gas volume flow fed to a gas burner (3) of a cooking appliance (1), in particular a gas cooking appliance, having a main selector valve (22) designed as an on-off valve and a plurality of control selector valves (28-32) arranged downstream of the main selector valve (22) and designed as on-off valves, wherein the gas valve (4) for adjusting the gas volume flow can be moved from a closed position (GP) without intermediate positions (ZP) directly to a full-flame position (VP) and from the full-flame position (VP) by way of multiple intermediate positions (ZP) gradually to a low-flame position (KP), wherein the main selector valve (22) is open in the full-flame position (VP), in each intermediate position (ZP) and in the low-flame position (KP), wherein the control selector valves (28-32) can be closed consecutively when the gas valve (4) is moved from the full-flame position (VP) to the low-flame position (KP), wherein the gas valve (4) comprises a flow plate (12) and a control disc (13) that can be moved relative to the flow plate (12), wherein each control selector valve (28-32) has a control opening (23-27) which is provided in the flow plate (12) and which can be covered and uncovered by the control disc (13) for closing and opening the respective control selector valve (28-32), **characterised in that** the main selector valve (22) has a main control opening (21) which is provided in the flow plate (12) and which can be covered and uncovered by the control disc (13) for closing and opening the main selector valve (22).

2. Gas valve according to claim 1, **characterised in that** the gas valve (4) can be moved to N positions, wherein the closed position (GP) is a first position and the full-flame position (VP) is a second position following on directly from the first position, and wherein the low-flame position (KP) is an N-th position.

3. Gas valve according to claim 1 or 2, **characterised in that** the control openings (23-27) are arranged parallel to one another, wherein the main control opening (21) and the control openings (23-27) are arranged in series with one another.

4. Gas valve according to one of claims 1-3, **characterised in that** the control openings (23-27) have the same or different diameters (d₂₃ - d₂₇).

5. Gas valve according to claim 4, **characterised in that** the diameters (d₂₃ - d₂₇) of the control openings (23-27) decrease in a flow direction (R₁₈) of the gas volume flow.

6. Gas valve according to claim 4 or 5, **characterised in that** a diameter (d₂₁) of the main control opening (21) is greater than a diameter (d₂₃) of the largest control opening (23).

7. Gas valve according to claim 6, **characterised in that** in the flow plate (12) a gas outlet opening (33) arranged downstream of the control openings (23-27) is provided, which is always uncovered.

8. Gas valve according to claim 7, **characterised in that** a diameter (d₃₃) of the gas outlet opening (33) is equal to or smaller than the diameter (d₂₁) of the main control opening (21) and larger than the diameter (d₂₃) of the largest control opening (23).

9. Gas valve according to claim 7 or 8, **characterised in that** the control disc (13) has a chamber (34) which fluidically connects the uncovered control openings (23-27) to the gas outlet opening (33).

10. Gas valve according to one of claims 1-9, **characterised in that** a sealing lip, in particular a rubber sealing lip, is provided on the control disc (13) for sealing the control disc (13) relative to the flow plate (12).

11. Gas valve according to one of claims 1-10, **characterised in that** the control disc (13) is biased against the flow plate (12) with the aid of a spring element (14).

12. Gas valve according to claim 11, **characterised by** a gas valve housing (5) in which the flow plate (12), the control disc (13) and the spring element (14) are accommodated, wherein the flow plate (12), the control disc (13) and the spring element (14) are mounted in the gas valve housing (5) in a common mounting direction (M).

13. Cooking appliance (1), in particular gas cooking appliance, having a gas valve (4) according to one of claims 1-12.

## Revendications

1. Robinet de gaz (4) pour le réglage d'un débit volumétrique de gaz amené au brûleur de gaz (3) d'un appareil de cuisson (1) en particulier d'un appareil de cuisson à gaz, avec une vanne principale (22) réalisée comme une vanne tout-ou-rien et une pluralité de vannes de commande (28-32) réalisées comme des vannes tout-ou-rien disposées en aval de la vanne principale (22), le robinet de gaz (4) pouvant être amené, pour le réglage du débit volumétrique de gaz, d'une position fermée (GP) sans position intermédiaire (ZP) directement dans une position de grande flamme (VP) et de la position de grande flamme (VP) en passant par plusieurs positions intermédiaires (ZP) progressivement dans une position de petite flamme (KP), la vanne principale (22) dans la position de grande flamme (VP), dans chaque position intermédiaire (ZP) et dans la position de petite flamme (KP) étant ouverte, les vannes de commande (28-32), lors du passage du robinet de gaz (4) de la position de grande flamme (VP) à la position de petite flamme (KP), pouvant se fermer successivement, le robinet de gaz (4) comprenant une plaque à circulation (12) et une rondelle de commande (13) à placer par rapport à la plaque à circulation (12), chaque vanne de commande (28-32) possédant un orifice de commande (23-27) prévu dans la plaque à circulation (12), lequel peut être caché et libéré par la rondelle de commande (13) pour la fermeture et l'ouverture de chaque vanne de commande (28-32), **caractérisé en ce que** la vanne principale (22) possède un orifice de commande principal (21) prévu dans la plaque à circulation (12) pouvant être caché et libéré par la rondelle de commande (13) pour la fermeture et l'ouverture de la vanne principale (22).

2. Robinet de gaz selon la revendication 1, **caractérisé en ce que** le robinet de gaz (4) peut être amené dans N positions, la position fermée (GP) étant une première position et la position de grande flamme (VP) étant une deuxième position succédant directement à la première position et la position de petite flamme (KP) étant une N-ième position.

3. Robinet de gaz selon la revendication 1 ou 2, **caractérisé en ce que** les orifices de commande (23-27) sont disposés parallèlement l'un à l'autre, l'orifice de commande principal (21) et les orifices de commande (23-27) étant disposés en série l'un par rapport à l'autre.

4. Robinet de gaz selon l'une des revendications 1-3, **caractérisé en ce que** les orifices de commande (23-27) ont des diamètres (d₂₃-d₂₇) égaux ou différents.

5. Robinet de gaz selon la revendication 4, **caractérisé en ce que** les diamètres (d₂₃-d₂₇) des orifices de commande (23-27) diminuent dans un sens d'écoulement (R₁₈) du débit volumétrique de gaz.

6. Robinet de gaz selon la revendication 4 ou 5, **caractérisé en ce que** le diamètre (d₂₁) de l'orifice de commande principal (21) est plus grand que le diamètre (d₂₃) du plus grand orifice de commande (23).

7. Robinet de gaz selon la revendication 6, **caractérisé en ce que** dans la plaque à circulation (12) est prévu un orifice de sortie de gaz (33) disposé en aval des orifices de commande (23-27), lequel est constamment libéré.

8. Robinet de gaz selon la revendication 7, **caractérisé en ce que** le diamètre (d₃₃) de l'orifice de sortie de gaz (33) est aussi grand ou plus petit que le diamètre (d₂₁) de l'orifice de commande principal (21) et est plus grand que le diamètre (d₂₃) du plus grand orifice de commande (23).

9. Robinet de gaz selon la revendication 7 ou 8, **caractérisé en ce que** la rondelle de commande (13) a une chambre (34) qui relie fluidiquement les orifices de commande (23-27) libérés avec l'orifice de sortie de gaz (33).

10. Robinet de gaz selon l'une des revendications 1-9, **caractérisé en ce que** pour assurer l'étanchéité de la rondelle de commande (13) par rapport à la plaque à circulation (12) est prévue, sur la rondelle de commande (13), une lèvre d'étanchéité, en particulier une lèvre d'étanchéité en caoutchouc.

11. Robinet de gaz selon l'une des revendications 1-10, **caractérisé en ce que** la rondelle de commande (13) est précontrainte à l'aide d'un élément à ressort (14) contre la plaque à circulation (12).

12. Robinet de gaz selon la revendication 11, **caractérisé par** un logement de robinet de gaz (5) dans lequel la plaque à circulation (12), la rondelle de commande (13) et l'élément à ressort (14) sont logés, la plaque à circulation (12), la rondelle de commande (13) et l'élément à ressort (14) étant assemblés dans un sens de montage (M) commun dans le logement de robinet de gaz (5).

13. Appareil de cuisson (1), en particulier appareil de cuisson à gaz, avec un robinet de gaz (4) selon l'une des revendications 1-12.
